# EUROPEAN PATENT APPLICATION

(11) **EP 4 455 151 A1**
(43) Date of publication of application: **30.10.2024**
(21) Application number: 22911347.7
(22) Date of filing: 22.12.2022
(51) Int. Cl.: C07F 3/06

(54) **ORGANIC ZINC COMPOUND AND PRODUCTION METHOD FOR ORGANIC ZINC COMPOUND**

(30) Priority: 23.12.2021 JP 2021209586
(71) Applicant: SynCrest Inc., Fujisawa-shi, Kanagawa 251-8555 (JP)
(72) Inventor: XU, Pengyu, Fujisawa-shi, Kanagawa 251-8555 (JP); YONEYAMA, Shin, Fujisawa-shi, Kanagawa 251-8555 (JP)
(74) Representative: Meissner Bolte Partnerschaft mbB
(86) International application number: PCT/JP2022/047379
(87) International publication number: WO 2023/120645

(57) **Abstract**

An object of the present invention is to provide a novel organic zinc compound useful for the synthesis of special amino acids. Provided are an organic zinc compound and a method for producing an organic zinc compound.

## Description

### Technical Field

The present invention relates to an organic zinc compound and a method for producing an organic zinc compound.

### Background Art

NPL 1 discloses an organic iodine zinc compound protected with a 9-fluorenylmethyloxycarbonyl protecting group (Fmoc).

PTL 1 discloses an organic iodine zinc compound protected with Boc and an organic iodine zinc compound protected with a benzyloxycarbonyl protecting group (Cbz).

### Citation List

### Non-patent Literature

NPL 1: Org. Biomol. Chem., 1(23), 4254-4261 (2003)

### Patent Literature

PTL 1: CN-A-111471003

### Summary of Invention

### Technical Problem

An object of the present invention is to provide a novel organic zinc compound useful for the synthesis of special amino acids.

### Solution to Problem

As a result of extensive studies to achieve the above object, the present inventors succeeded in producing a novel organic zinc compound useful for the synthesis of special amino acids by using a halogen compound.

Upon further studies based on this finding, the present inventors have completed the present invention.

Specifically, the present invention includes an organic zinc compound and a method for producing an organic zinc compound described below.

### Item 1.

An organic zinc compound represented by the following formula (1): 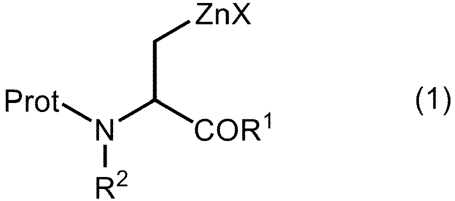 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group,
   wherein
when X is a chlorine atom, Prot is Fmoc, Boc, Alloc, or Cbz, and
when X is a bromine atom, Prot is Fmoc, Alloc, or Cbz.

### Item 2.

A method for producing an organic zinc compound represented by the following formula (1): 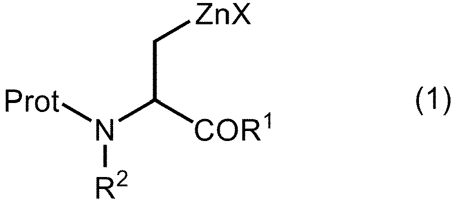 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group;
the method comprising reacting a compound represented by the following formula (2): 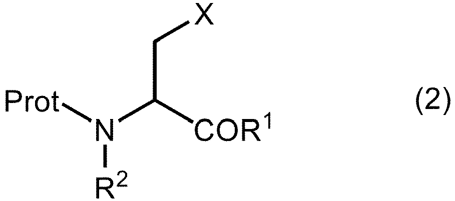 wherein
   X, Prot, R¹, and R² are as defined in formula (1),
   and zinc in an organic solvent in the presence of a halogen compound,
      wherein
   in formulas (1) and (2),
   when X is a chlorine atom, Prot is Fmoc, Boc, Alloc, or Cbz, and
   when X is a bromine atom, Prot is Fmoc, Alloc, or Cbz.

### Item 3.

The production method according to Item 2,
wherein the halogen compound is at least one halogen compound selected from the group consisting of halogen and alkyl halide.

### Item 4.

The production method according to Item 2 or 3,
wherein the organic solvent is at least one organic solvent selected from the group consisting of an aprotic polar solvent, a halogen solvent, an ether solvent, an ester solvent, a hydrocarbon solvent, and an aromatic solvent.

The organic zinc compound is excellent in stability and useful for the synthesis of special amino acids.

### Advantageous Effects of Invention

The present invention can provide a novel organic zinc compound useful for the synthesis of special amino acids.

### Description of Embodiments

The present invention is described in detail below.

In the present specification, the terms "comprise" and "contain" include the concepts of "comprise," "contain," "consist essentially of," and "consist of."

In the present specification, a numerical range indicated by "A to B" means "A or more and B or less."

### [1] Method for Producing Organic Zinc Compound

The method for producing an organic zinc compound represented by the following formula (1): 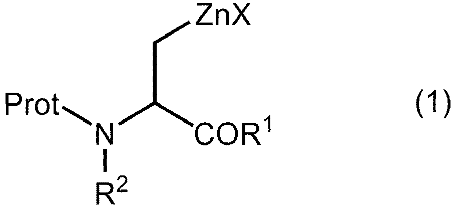 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group,
   of the present invention (hereinafter also referred to as "the method for producing an organic zinc compound of the present invention") comprises reacting a compound represented by the following formula (2): 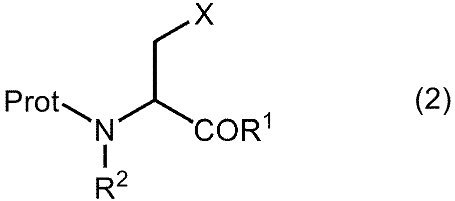 wherein X, Prot, R¹, and R² are as defined in formula (1), and zinc in an organic solvent in the presence of a halogen compound.

In the method for producing an organic zinc compound of the present invention, in formulas (1) and (2), when X is a chlorine atom, Prot is Fmoc, Boc, Alloc, or Cbz.

In the method for producing an organic zinc compound of the present invention, in formulas (1) and (2), when X is a bromine atom, Prot is Fmoc, Alloc, or Cbz.

In the method for producing an organic zinc compound of the present invention, the halogen compound is preferably at least one halogen compound selected from the group consisting of halogen and alkyl halide.

In the method for producing an organic zinc compound of the present invention, the organic solvent is preferably at least one organic solvent selected from the group consisting of an aprotic polar solvent, a halogen solvent, an ether solvent, an ester solvent, a hydrocarbon solvent, and an aromatic solvent.

The organic zinc compound obtained by the method for producing an organic zinc compound of the present invention is excellent in stability and useful for the synthesis of special amino acids.

### [1-1] Compound Represented by Formula (2)

The method for producing an organic zinc compound of the present invention uses a compound represented by the following formula (2): 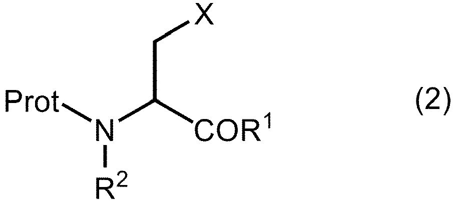 as a substrate (raw material compound) and comprises reacting this compound with zinc in an organic solvent in the presence of a halogen compound.

In formula (2), X is a chlorine atom or a bromine atom.

In formula (2), Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz) .

In formula (2), R¹ is a hydroxyl group or a protecting group for a carboxylic acid.

In formula (2), R² is a hydrogen atom or an alkyl group.

In formula (2), when X is a chlorine atom, Prot is Fmoc, Boc, Alloc, or Cbz.

In formula (2), when X is a bromine atom, Prot is Fmoc, Alloc, or Cbz.

In formula (2), R¹ is preferably a protecting group for a carboxylic acid. Generally known protecting groups for carboxylic acids may be used. Examples include the protecting groups described in chapter 5 of "Protective Groups in Organic Synthesis, 1981, John Wiley & Sons, Inc." by Theodora W. Greene.

In formula (2), R¹ is more preferably
a C₁₋₄ linear or branched alkoxy group, such as methoxy, ethoxy, n-propoxy, isopropyloxy, n-butoxy, isobutyloxy, sec-butoxy, tert-butoxy, or 1-ethylpropyloxy;
a C₁₋₁₈ linear or branched alkoxy group, such as n-pentyloxy, isopentyloxy, neopentyloxy, n-hexyloxy, isohexyloxy, 3-methylpentyloxy, n-heptyloxy, n-octyloxy, n-nonyloxy, n-decyloxy, n-undecyloxy, n-dodecyloxy, 5-propylnonyloxy, n-tridecyloxy, n-tetradecyloxy, n-pentadecyloxy, hexadecyloxy, heptadecyloxy, or octadecyloxy;
a C₃₋₈ cyclic alkoxy group, such as cyclopropyloxy, cyclobutyloxy, cyclopentyloxy, cyclohexyloxy, cycloheptyloxy, or cyclooctyloxy;
an optionally substituted phenoxy group, such as phenoxy, 2,6-dimethylphenoxy, 2,6-di-tert-butyl-4-methylphenoxy, or 2-(dimethylamino)-5-nitrophenoxy;
an optionally substituted benzyl group, such as benzyloxy, diphenylmethyloxy, or triphenylmethyloxy;
an optionally substituted phenacyloxy group, such as phenacyloxy, p-bromophenacyloxy, α-methylphenacyloxy, or 3,4,5-trimethoxyphenacyloxy;
a trialkylsilyloxy group, such as trimethylsilyloxy or triethylsilyloxy; or the like.

In formula (2), R¹ is even more preferably a C₁₋₄ linear or branched alkoxy group, an optionally substituted phenoxy group, or an optionally substituted benzyloxy group.

In formula (2), R¹ is particularly preferably methoxy, tert-butoxy, or the like.

In formula (2), R² is preferably a hydrogen atom or a linear, branched, or cyclic alkyl group.

Specific examples include
C₁₋₄ linear or branched alkyl groups, such as methyl, ethyl, n-propyl, isopropyl, n-butyl, isobutyl, sec-butyl, tert-butyl, and 1-ethylpropyl;
C₁₋₁₈ linear or branched alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl;
C₃₋₈ cyclic alkyl groups, such as cyclopropyl, cyclobutyl, cyclopentyl, cyclohexyl, cycloheptyl, and cyclooctyl; and the like.

In formula (2), R² is more preferably a hydrogen atom, a C₁₋₄ linear or branched alkyl group, or the like.

In formula (2), R² is even more preferably a hydrogen atom, methyl, or the like.

The compound represented by formula (2) includes a compound whose three-dimensional structure is L type (compound represented by formula (2a) (L-form)) or D type (compound represented by formula (2b) (D-form)), or a mixture of an L-type compound and a D-type compound. 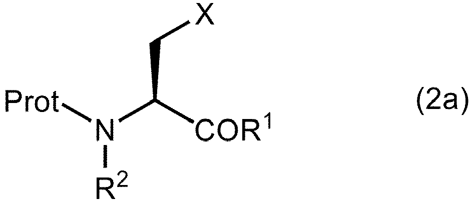 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group. 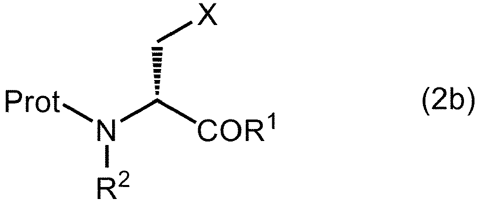
wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group.

### [1-2] Organic Solvent

The method for producing an organic zinc compound of the present invention comprises reacting the compound represented by formula (2) (substrate) and zinc in an organic solvent in the presence of a halogen compound.

The organic solvent is preferably at least one organic solvent selected from the group consisting of an aprotic polar solvent, a halogen solvent, an ether solvent, an ester solvent, a hydrocarbon solvent, and an aromatic solvent.

The aprotic polar solvent is preferably acetone, acetonitrile, N,N-dimethylformamide (DMF), dimethyl sulfoxide (DMSO), or the like.

The halogen solvent is preferably dichloromethane (CH₂Cl₂), trichloromethane (CHCl₃), or the like.

The ether solvent is preferably tetrahydrofuran (THF), dioxane, diethyl ether (Et₂O), isopropyl ether (IPE), or the like.

The ester solvent is preferably ethyl acetate (AcOEt) or the like.

The hydrocarbon solvent is preferably n-hexane or the like.

The aromatic solvent is preferably toluene or the like.

The organic solvent is more preferably an aprotic polar solvent, such as acetone, acetonitrile, DMF, or DMSO; an ether solvent (polar solvent), such as THF, dioxane, or diethyl ether; or a halogen solvent, such as dichloromethane or trichloromethane.

The amount of the organic solvent used is adjusted so that the concentration (M (mol/L)) of the compound represented by formula (2) (substrate) is preferably 0.01 M to 5 M, and more preferably 0.1 M to 2 M.

### [1-3] Halogen Compound

The method for producing an organic zinc compound of the present invention comprises reacting the compound represented by formula (2) and zinc in an organic solvent in the presence of a halogen compound.

The halogen (X) of the organic zinc compound represented by formula (1) as a product produced by the method for producing an organic zinc compound of the present invention is derived from the compound represented by formula (2) used as the substrate (raw material compound), rather than the halogen compound.

The halogen compound is preferably at least one halogen compound selected from the group consisting of halogen and alkyl halide.

The halogen is preferably at least one halogen selected from the group consisting of fluorine, chlorine, bromine, and iodine, and more preferably chlorine or bromine.

The alkyl halide is an organic compound represented by formula R^{a}-X^{a}, wherein R^{a} is an alkyl group and X^{a} is a halogen atom.

In formula R^{a}-X^{a}, R^{a} is an alkyl group, and preferably a linear, branched, or cyclic alkyl group.

Specific examples include
C₁₋₄ linear or branched alkyl groups, such as methyl, ethyl, n-propyl, isopropyl, n-butyl, isobutyl, sec-butyl, tert-butyl, and 1-ethylpropyl;
C₁₋₁₈ linear or branched alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl;
C₃₋₈ cyclic alkyl groups, such as cyclopropyl, cyclobutyl, cyclopentyl, cyclohexyl, cycloheptyl, and cyclooctyl; and the like.

In formula R^{a}-X^{a}, X^{a} is a halogen atom, preferably at least one halogen atom selected from the group consisting of a fluorine atom, a chlorine atom, a bromine atom, and an iodine atom, and more preferably a chlorine atom or a bromine atom.

In the method for producing an organic zinc compound of the present invention, the amount of the halogen compound used is adjusted so that the concentration (M (mol/L)) in the organic solvent is preferably 0.01 M to 5 M, and more preferably 0.1 M to 2 M.

In the method for producing an organic zinc compound of the present invention, the amount of the halogen compound used is preferably 0.01 mol% to 100 mol%, more preferably 0.1 mol% to 50 mol%, and even more preferably 1 mol% to 10 mol%, in molar ratio as a concentration relative to the compound represented by formula (2) (substrate) (when the concentration of the substrate is 100 mol%).

The method for producing an organic zinc compound of the present invention can produce a novel organic zinc compound by using a halogen compound (preferably halogen, alkyl halide, etc.), and this organic zinc compound is excellent in stability and useful for the synthesis of special amino acids.

### [1-4] Zinc

The method for producing an organic zinc compound of the present invention comprises reacting the compound represented by formula (2) and zinc in an organic solvent in the presence of a halogen compound.

The zinc (Zn) of the organic zinc compound represented by formula (1) as a product produced by the method for producing an organic zinc compound of the present invention is derived from zinc used as the substrate (raw material compound).

In the method for producing an organic zinc compound of the present invention, the amount of zinc used is adjusted so that the concentration (M (mol/L)) in the organic solvent is preferably 0.01 M to 5 M, and more preferably 0.1 M to 2 M.

In the method for producing an organic zinc compound of the present invention, the amount of zinc used is preferably 50 mol% to 10,000 mol%, more preferably 90 mol% to 1000 mol%, and even more preferably 100 mol% to 500 mol%, in molar ratio as a concentration relative to the compound represented by formula (2) (substrate) (when the concentration of the substrate is 100 mol%).

The method for producing an organic zinc compound of the present invention can produce a novel organic zinc compound by using zinc, and this organic zinc compound is excellent in stability and useful for the synthesis of special amino acids.

### [1-5] Method for Producing Organic Zinc Compound

The method for producing an organic zinc compound of the present invention can produce a novel organic zinc compound by using zinc, and this organic zinc compound is excellent in stability and useful for the synthesis of special amino acids.

In the method for producing an organic zinc compound of the present invention, the reaction temperature is preferably 0°C to 100°C, more preferably 10°C to 80°C, and even more preferably 20°C to 60°C.

In the method for producing an organic zinc compound of the present invention, the reaction time is preferably 0.1 hours to 100 hours, more preferably 0.1 hours to 50 hours, and even more preferably 0.1 hours to 10 hours.

The production method of the present invention can produce the target organic zinc compound while keeping the three-dimensional structure of the substrate.

When the compound represented by formula (2a), whose three-dimensional structure is L type, is used as the substrate, an organic zinc compound represented by formula (1a) (L-form) can be produced. 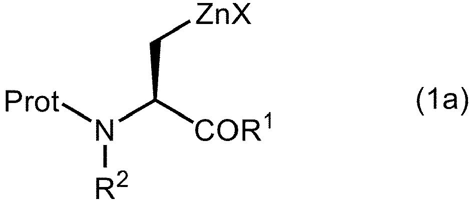 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group. 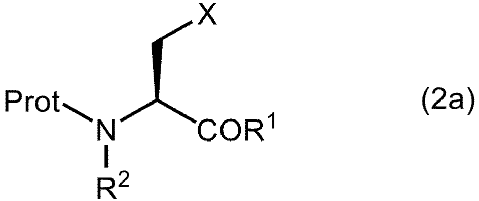
wherein X, Prot, R¹, and R² are as defined in formula (1a).

On the other hand, when the compound represented by formula (2b), whose three-dimensional structure is D type, is used as the substrate, an organic zinc compound represented by formula (1b) (D-form) can be produced. 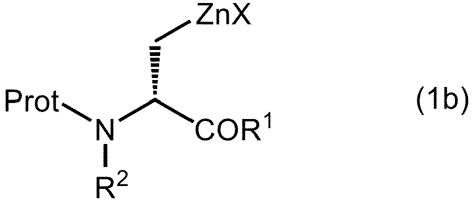 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group. 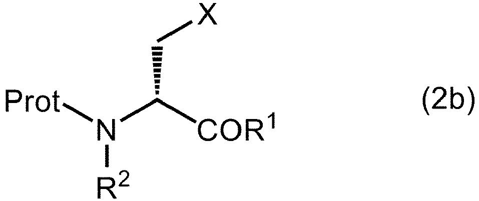
wherein X, Prot, R¹, and R² are as defined in formula (1a).

Similarly, when a mixture of L- and D-forms is used as the substrate as the compound represented by formula (2), a mixture of L- and D-forms of the organic zinc compound represented by formula (1), in which the proportion of L- and D-forms is maintained, is produced.

### [2] Organic Zinc Compound

The organic zinc compound of the present invention is represented by the following formula (1): 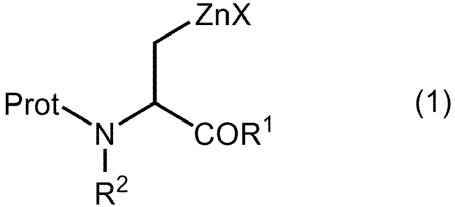 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group,
wherein when X is a chlorine atom, Prot is Fmoc, Boc, Alloc, or Cbz, and when X is a bromine atom, Prot is Fmoc, Alloc, or Cbz.

The organic zinc compound of the present invention can be produced by the method for producing an organic zinc compound of the present invention by reacting the compound represented by formula (2) and zinc in an organic solvent in the presence of a halogen compound.

In formula (1), X is a chlorine atom or a bromine atom.

In formula (1), Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz) .

In formula (1), R¹ is a hydroxyl group or a protecting group for a carboxylic acid.

In formula (1), R² is a hydrogen atom or an alkyl group.

In formula (1), when X is a chlorine atom (Cl), Prot is Fmoc, Boc, Alloc, or Cbz.

In formula (1), when X is a bromine atom (Br), Prot is Fmoc, Alloc, or Cbz.

In formula (1), R¹ is preferably a protecting group for a carboxylic acid. Generally known protecting groups for carboxylic acids may be used. Examples include the protecting groups described in chapter 5 of "Protective Groups in Organic Synthesis, 1981, John Wiley & Sons, Inc." by Theodora W. Greene.

In formula (1), R¹ is more preferably
a C₁₋₄ linear or branched alkoxy group, such as methoxy, ethoxy, n-propoxy, isopropyloxy, n-butoxy, isobutyloxy, sec-butoxy, tert-butoxy, or 1-ethylpropyloxy;
a C₁₋₁₈ linear or branched alkoxy group, such as n-pentyloxy, isopentyloxy, neopentyloxy, n-hexyloxy, isohexyloxy, 3-methylpentyloxy, n-heptyloxy, n-octyloxy, n-nonyloxy, n-decyloxy, n-undecyloxy, n-dodecyloxy, 5-propylnonyloxy, n-tridecyloxy, n-tetradecyloxy, n-pentadecyloxy, hexadecyloxy, heptadecyloxy, or octadecyloxy;
a C₃₋₈ cyclic alkoxy group, such as cyclopropyloxy, cyclobutyloxy, cyclopentyloxy, cyclohexyloxy, cycloheptyloxy, or cyclooctyloxy;
an optionally substituted phenoxy group, such as phenoxy, 2,6-dimethylphenoxy, 2,6-di-tert-butyl-4-methylphenoxy, or 2-(dimethylamino)-5-nitrophenoxy;
an optionally substituted benzyl group, such as benzyloxy, diphenylmethyloxy, or triphenylmethyloxy;
an optionally substituted phenacyloxy group, such as phenacyloxy, p-bromophenacyloxy, α-methylphenacyloxy, or 3,4,5-trimethoxyphenacyloxy;
a trialkylsilyloxy group, such as trimethylsilyloxy or triethylsilyloxy; or the like.

In formula (1), R¹ is more preferably a C₁₋₄ linear or branched alkoxy group, an optionally substituted phenoxy group, or an optionally substituted benzyloxy group.

In formula (1), R¹ is particularly preferably methoxy, tert-butoxy, or the like.

In formula (1), R² is a hydrogen atom or an alkyl group.

In formula (1), R² is preferably a hydrogen atom or a linear, branched, or cyclic alkyl group.

Specific examples include a hydrogen atom;
C₁₋₄ linear or branched alkyl groups, such as methyl, ethyl, n-propyl, isopropyl, n-butyl, isobutyl, sec-butyl, tert-butyl, and 1-ethylpropyl;
C₁₋₁₈ linear or branched alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl;
C₃₋₈ cyclic alkyl groups, such as cyclopropyl, cyclobutyl, cyclopentyl, cyclohexyl, cycloheptyl, and cyclooctyl; and the like.

In formula (1), R² is more preferably a hydrogen atom, a C₁₋₄ linear or branched alkyl group, or the like.

In formula (1), R² is even more preferably a hydrogen atom, methyl, or the like.

The compound represented by formula (1) includes a compound whose three-dimensional structure is L type (organic zinc compound represented by formula (1a)) or D type (organic zinc compound represented by formula (1b)), or a mixture of an L-type compound and a D-type compound. 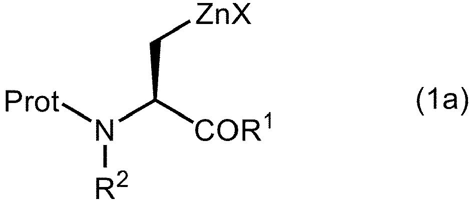 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group. 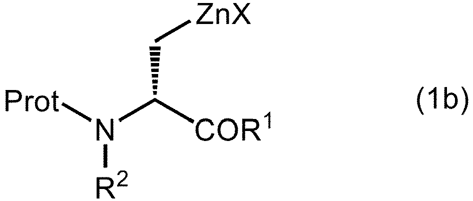
wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group.

The organic zinc compound of the present invention is excellent in stability and useful for the synthesis of special amino acids. The organic zinc compound of the present invention can serve as a novel organic zinc-type amino acid intermediate for novel medicines in the development of medicines, such as special amino acids. The organic zinc compound of the present invention is useful for the creation of novel medicines, such as novel artificial amino acids.

The embodiments of the present invention are described above; however, the present invention is not limited to these examples. Needless to say, the present invention can be implemented in various forms within the scope not departing from the gist of the present invention.

### Examples

Embodiments of the present invention are described in more detail below based on Examples.

The present invention is not limited thereto.

In the Examples, MeO represents a methoxy group, and t-BuO represents a tert-butoxy group.

### Production Methods of Examples

### Example 1

### (Production of Compound of Formula (1) wherein Prot=Fmoc, X=Br, R¹=MeO, and R²=H)

Zinc (3 mmol, 196.2 mg) as a substrate (raw material compound) and iodine (0.02 mmol, 5 mg) as a halogen compound were placed in sequence in a dimethyl sulfoxide (DMSO) solvent (5 mL) as an organic solvent, followed by stirring for 1 minute to 5 minutes.

An Fmoc-protected (l)-bromoserine methyl ester (2 mmol, 800 mg) as a substrate (raw material compound of formula (2) wherein Prot=Fmoc, X=Br, R¹=MeO, and R²=H) was further placed in the solvent, followed by stirring for 5 minutes to 12 hours.

As a result of the above production method, an organic zinc compound (L-form of formula (1a): Prot=Fmoc, X=Br, R¹=MeO, R²=H) could be obtained.

After the obtained organic zinc compound was freeze-dried, NMR was measured in DMSO-d6 and is shown below.

1H NMR (300 MHz, d6-DMSO): 8.03 (d, J = 8.4 Hz, 1H), 7.90 (d, J = 7.2 Hz, 2H), 7.73 (d, J = 7.2 Hz, 2H), 7.43 (t, J = 6.9 Hz, 2H), 7.34 (t, J = 6.9 Hz, 2H), 6.30 (d, J = 6.6 Hz, 1H), 3.96-3.89 (m, 1H), 3.54 (s, 3H), 0.27-0.18 (m, 2H)

### Example 2

### (Production of Compound of Formula (1) wherein Prot=Boc, X=Cl, R¹=MeO, and R²=H)

Zinc (3 mmol, 196.2 mg) as a substrate (raw material compound) and dibromoethane (0.05 mmol, 10 mg) as a halogen compound were placed in sequence in a dimethyl sulfoxide (DMSO) solvent (5 mL) as an organic solvent, followed by stirring for 5 minutes to 30 minutes.

A Boc-protected (l)-chloroserine methyl ester (2 mmol, 475 mg) as a substrate (raw material compound of formula (2) wherein Prot=Boc, X=Cl, R¹=MeO, and R²=H) was further placed in the solvent, followed by stirring for 5 minutes to 12 hours.

As a result of the above production method, an organic zinc compound (L-form of formula (1a): Prot=Boc, X=Cl, R¹=MeO, and R²=H) could be obtained.

After the obtained organic zinc compound was freeze-dried, NMR was measured in DMSO-d6 and is shown below.

1H NMR (300 MHz, d6-DMSO): 6.29 (d, J = 6.4 Hz, 1H), 3.96-3.88 (m, 1H), 3.51 (s, 3H), 1.36 (s, 9H), 0.25-0.17 (m, 2H)

### Example 3

### (Production of Compound of Formula (1) wherein Prot=Boc, X=Cl, R¹=tBuO, and R²=H)

Zinc (3 mmol, 196.2 mg) as a substrate (raw material compound) and dibromoethane (0.025 mmol, 5 mg) as a halogen compound were placed in sequence in a dimethyl sulfoxide (DMSO) solvent (5 mL) as an organic solvent, followed by stirring for 5 minutes to 60 minutes.

A Boc-protected (l)-chloroserine butyl ester (2 mmol, 560 mg) as a substrate (raw material compound of formula (2) wherein Prot=Boc, X=Cl, R¹=tBuO, and R²=H) was further placed in the solvent, followed by stirring for 30 minutes to 12 hours.

As a result of the above production method, an organic zinc compound (L-form of formula (1a): Prot=Boc, X=Cl, R¹=tBuO, R²=H) could be obtained.

After the obtained organic zinc compound was freeze-dried, NMR was measured in DMSO-d6 and is shown below.

1H NMR (300 MHz, d6-DMSO): 6.29 (d, J = 6.4 Hz, 1H), 3.96-3.88 (m, 1H), 3.51 (s, 3H), 1.42 (s, 9H), 1.36 (s, 9H), 0.25-0.17 (m, 2H)

### Example 4

### (Production of Compound of Formula (1) wherein Prot=Fmoc, X=Cl, R¹=tBuO, and R²=H)

Zinc (6 mmol, 400.0 mg) as a substrate (raw material compound) and dibromoethane (0.05 mmol, 10 mg) as a halogen compound were placed in sequence in a dimethyl sulfoxide (DMSO) solvent (10 mL) as an organic solvent, followed by stirring for 30 minutes to 60 minutes.

An Fmoc-protected (l)-chloroserine butyl ester (2 mmol, 810 mg) as a substrate (raw material compound of formula (2) wherein Prot=Fmoc, X=Cl, R¹=tBuO, and R²=H) was further placed in the solvent, followed by stirring for 30 minutes to 24 hours at 45°C.

As a result of the above production method, an organic zinc compound (L-form of formula (1a): Prot=Fmoc, X=Cl, R¹=tBuO, R²=H) could be obtained.

After the obtained organic zinc compound was freeze-dried, NMR was measured in DMSO-d6 and is shown below.

1H NMR (300 MHz, d6-DMSO): 8.03 (d, J = 8.4 Hz, 1H), 7.91 (d, J = 7.2 Hz, 2H), 7.73 (d, J = 7.2 Hz, 2H), 7.43 (t, J = 6.9 Hz, 2H), 7.34 (t, J = 6.9 Hz, 2H), 6.31 (d, J = 6.6 Hz, 1H), 3.95-3.88 (m, 1H), 1.42 (s, 9H), 0.25-0.16 (m, 2H)

### Example 5

### (Production of Compound of Formula (1) wherein Prot=Cbz, X=Br, R¹=MeO, and R²=H)

Zinc (3 mmol, 196.2 mg) as a substrate (raw material compound) and iodine (0.02 mmol, 5 mg) as a halogen compound were placed in sequence in a dimethyl sulfoxide (DMSO) solvent (5 mL) as an organic solvent, followed by stirring for 1 minute to 5 minutes.

A Cbz-protected (l)-bromoserine methyl ester (2 mmol, 630 mg) as a substrate (raw material compound of formula (2) wherein Prot=Cbz, X=Br, R¹=MeO, and R²=H) was further placed in the solvent, followed by stirring for 5 minutes to 6 hours.

As a result of the above production method, an organic zinc compound (L-form of formula (1a): Prot=Cbz, X=Br, R¹=MeO, R²=H) could be obtained.

After the obtained organic zinc compound was freeze-dried, NMR was measured in DMSO-d6 and is shown below.

1H NMR (300 MHz, d6-DMSO): 7.39-7.20 (m, 5H), 6.22 (d, J = 6.2 Hz, 1H), 5.01 (s, 2H), 3.96-3.89 (m, 1H), 3.55 (s, 3H), 0.28-0.18

### (m, 2H)

The obtained organic zinc compounds are each represented by the following formula (1): 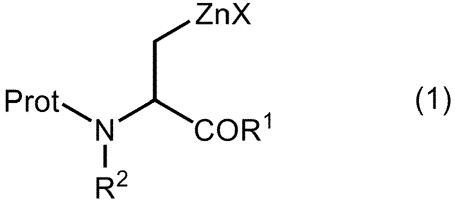
wherein in formula (1),
   X is a chlorine atom or a bromine atom,
   Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
   R¹ is a hydroxyl group or a protecting group for a carboxylic acid, and
   R² is a hydrogen atom or an alkyl group,
wherein when X is a chlorine atom, Prot is Fmoc, Boc, Alloc, or Cbz, and when X is a bromine atom, Prot is Fmoc, Alloc, or Cbz.

Conventional iodine zinc compounds could not be isolated and could not be taken out by freeze drying.

On the other hand, the organic chlorine zinc compound and organic bromine zinc compound of the present invention could be freeze-dried well and could be isolated well.

### Industrial Applicability

The method for producing an organic zinc compound of the present invention can produce a novel organic zinc compound by using zinc, and this organic zinc compound is excellent in stability and useful for the synthesis of special amino acids.

The organic zinc compound of the present invention can serve as a novel organic zinc-type amino acid intermediate for novel medicines in the development of medicines, such as special amino acids. The organic zinc compound of the present invention is useful for the creation of novel medicines, such as novel artificial amino acids.

## Claims

1. An organic zinc compound represented by the following formula (1): 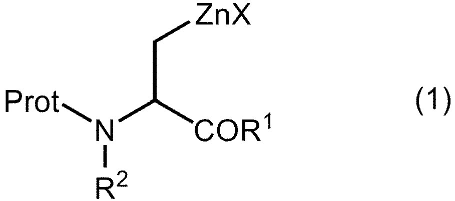 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group,
wherein
when X is a chlorine atom, Prot is Fmoc, Boc, Alloc, or Cbz, and
when X is a bromine atom, Prot is Fmoc, Alloc, or Cbz.

2. A method for producing an organic zinc compound represented by the following formula (1): 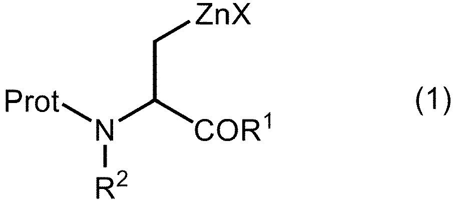 wherein
X is a chlorine atom or a bromine atom,
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group;
the method comprising reacting a compound represented by the following formula (2): 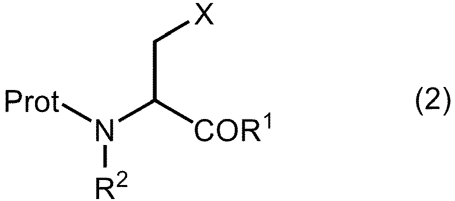 wherein
X, Prot, R¹, and R² are as defined in formula (1),
and zinc in an organic solvent in the presence of a halogen compound,
wherein
in formulas (1) and (2),
when X is a chlorine atom, Prot is Fmoc, Boc, Alloc, or Cbz, and
when X is a bromine atom, Prot is Fmoc, Alloc, or Cbz.

3. The production method according to claim 2,
wherein the halogen compound is at least one halogen compound selected from the group consisting of halogen and alkyl halide.

4. The production method according to claim 2 or 3,
wherein the organic solvent is at least one organic solvent selected from the group consisting of an aprotic polar solvent, a halogen solvent, an ether solvent, an ester solvent, a hydrocarbon solvent, and an aromatic solvent.
